# EUROPÄISCHE PATENTSCHRIFT

(11) **EP 0 708 297 B1**
(45) Veröffentlichungstag und Bekanntmachung des Hinweises auf die Patenterteilung: **03.03.1999**
(21) Anmeldenummer: 95115771.8
(22) Anmeldetag: 06.10.1995
(51) Int. Cl.: F23G 5/08, F23L 7/00

(54) **Verfahren zum Verbrennen von Abfall**
Method for incineration of waste
Procédé d'incinération de déchets

(30) Priorität: 20.10.1994 CH 3153/94
(43) Veröffentlichungstag der Anmeldung: 24.04.1996
(73) Patentinhaber: Von Roll Umwelttechnik AG, 8005 Zürich (CH)
(72) Erfinder: Rüegg, Hans, CH-5610 Wohlen (CH); Ungricht, Thomas, CH-8050 Zürich (CH)
(74) Vertreter: Patentanwälte Schaad, Balass, Menzl & Partner AG

(56) Entgegenhaltungen:
- EP-A- 0 405 124
- CA-A- 1 319 055
- CH-A- 482 988
- DE-A- 4 026 245
- DE-A- 4 104 507
- US-A- 4 291 634

## Beschreibung

Die Erfindung betrifft ein Verfahren zum Verbrennen von losem Abfall, insbesondere von Müll, gemäss dem Oberbegriff von Anspruch 1.

Aus der CH-PS 482 988 ist ein Verfahren zum Verbrennen von losem Abfall bekannt, bei welchem der lose Abfall zuerst in einem ersten Raum getrocknet und erhitzt, und danach in einem zweiten Raum, d.h. örtlich getrennt, geschmolzen wird. In den zweiten Raum, den Schmelzraum, der zylinderförmig ist, werden die Abfallstoffe über den Umfang gleichmässig verteilt eingefüllt. Zur Verbrennung der brennbaren Bestandteile werden vorgewärmte Verbrennungsmittel, beispielsweise vorerhitzte Luft, zusammen mit brennbaren flüssigen Abfallstoffen oder Brennstoffen in den Schmelzraum tangential eingeleitet. Dieses Verfahren hat sich auch bei hoher Erwärmung des Verbrennungsmittel nicht bewährt, da im Schmelzraum keine zum Schmelzen ausreichenden Temperaturen erreicht werden konnten.

Aus der CH-PS 432 703 ist das Schmelzen einer dünnen Schicht vorgetrockneter und vorerhitzter Abfälle in einem Schmelzraum unter Zuführung von zusätzlichen Brennstoffen und Verbrennungsmitteln bekannt. Die Verwendung von Fremdbrennstoffen verteuert das Verfahren und ist daher unwirtschaftlich.

Aus der US-PS 4,291,634 ist ein Verfahren sowie eine Vorrichtung zum Verbrennen von Abfall bekannt, wobei der Verbrennungsofen an dessen Eintrittsöffnung eine Verengung aufweist, um ein Hineinfallen von nur teilweise pyrolysiertem Material in die Schlacke zu verhindern.

Dadurch wird ein Abkühlen der Schlacke sowie ein Verstopfen der Abzugsöffnung verhindert. Nachteilig ist die Tatsache, dass durch aus dem Ofen aufsteigende Gase Teile des nur teilweise pyrolysierten Materials fortgetragen werden kann.

Der vorliegenden Erfindung liegt die Aufgabe zugrunde, ein wirtschaftlicheres Verfahren vorzuschlagen, das ohne Fremdbrennstoffe auskommt und trotzdem problemlos die notwendige Schmelztemperatur erreicht.

Diese Aufgabe wird erfindungsgemäss durch Merkmale des kennzeichnenden Teils von Anspruch 1 gelöst.

Überraschenderweise wurde gefunden, dass durch direkte Beaufschlagung der am Boden oder entlang einer Seitenwand des Ofenraumes gebildeten Schicht aus losem Abfall mit Sauerstoff allein, d.h. ohne zusätzliche flüssige Brennstoffe, genügend Wärme zum Schmelzen der Abfallstoffe erzeugt wird. Der Sauerstoff wird erfindungsgemäss mit mindestens Schallgeschwindigkeit zugeführt; die dadurch erzielte Verwirbelung der Abfallschicht bewirkt eine vollständige Verbrennung und Einschmelzung des Abfalls. Ein weiterer Vorteil der Erfindung wird darin gesehen, dass das Trocknen, Verbrennen und Einschmelzen des Abfalls ohne vorherige Abfallbehandlung in einem einzigen Raum ohne Zusatz flüssiger Brennstoffe stattfindet, wobei der zum Durchführen des Verfahrens vorgeschlagene Ofen eine einfache Konstruktion aufweist.

In der Zeichnung sind zwei Ausführungsbeispiele einer Vorrichtung zum Durchführen des erfindungsgemässen Verfahrens dargestellt. Im folgenden wird anhand der Zeichnung eine Ausführungsform des erfindungsgemässen Verfahrens sowie eine Vorrichtung zu dessen Durchführung näher beschrieben.

Es zeigen:
- Fig.1: einen vertikalen Mittelschnitt durch einen Ofenraum gemäss einem ersten Ausführungsbeispiel;
- Fig.2: einen partiellen horizontalen Querschnitt nach Linie II-II in Fig.1;
- Fig.3: einen vertikalen Mittelschnitt durch einen Ofenraum gemäss einem zweiten Ausführungsbeispiel;
- Fig.4: einen partiellen horizontalen Querschnitt nach Linie IV-IV in Fig.3.

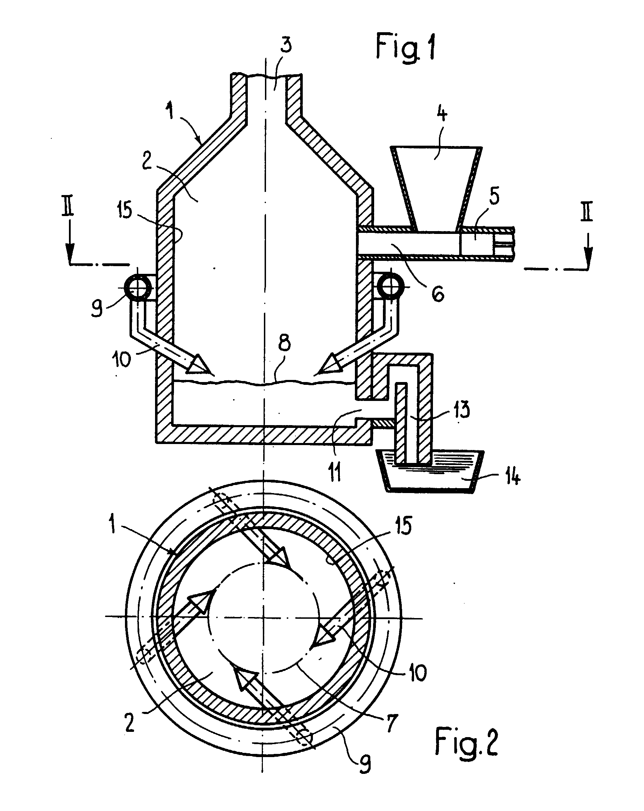

Gemäss Fig. 1 und 2 weist ein Ofen 1 einen zylinderförmigen Ofenraum 2 auf, der sich oben kegelförmig zu einem Gasabzugschacht 3 verengt. Im Innern ist der Ofen 1 wie üblich mit einer nicht näher dargestellten, symbolisch mit 15 bezeichneten, hitzebeständigen Wandauskleidung ausgestattet. Das Abfallmaterial wird in nicht näher dargestellter Weise in einen Einfülltrichter 4 gefüllt und mittels eines Stössels 5 durch einen seitlich in den Ofenraum 2 mündenden Einfüllkanal 6 gefördert. Am Umfang des Ofens 1 ist ein Ringraum 9 angebracht, über welchen mehrere Lanzen 10 mit technischem Sauerstoff versorgt werden. Die Lanzen münden schräg und gleichsinnig tangential zu einem imaginären Kreis 7 ( Fig.2 ) in den Ofenraum 2 hinein und sind direkt auf eine Oberfläche 8 der sich im unteren Bereich des Ofenraumes 2 befindenden Abfallschicht gerichtet. Der Einfüllkanal 6 ist oberhalb der Lanzen 10 angeordnet.

Im unteren Bereich ist der Schmelzofen 1 mit einer seitlichen Abzugöffnung 11 für die flüssige Schlacke versehen, die über einen Kanal 13 mit einem Wasserbad 14 verbunden ist.

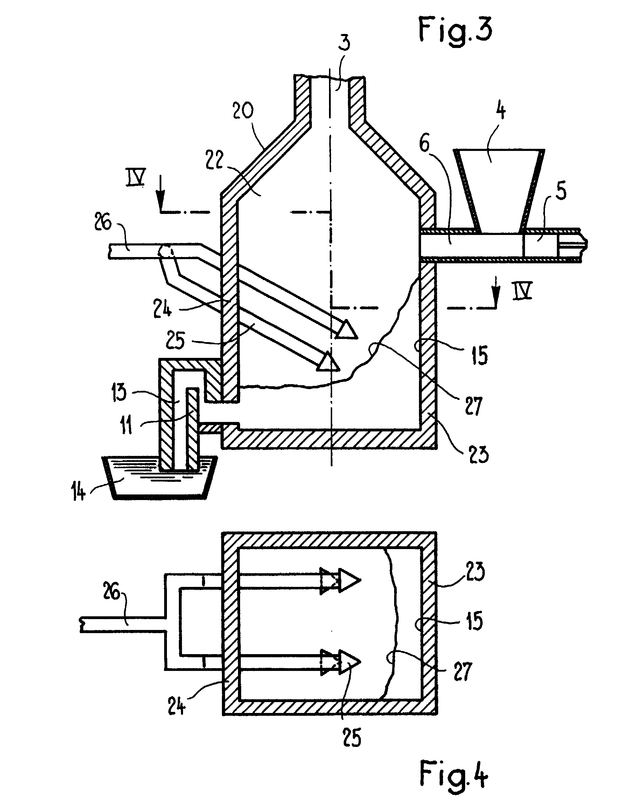

Bei dem in Fig. 3 und 4 dargestellten Ausführungsbeispiel eines Ofens 20 sind die identischen und gleichwirkenden Teile mit den gleichen Bezugsziffern bezeichnet, wie bei der Ausführungsform nach Fig. 1 und 2.

Bei dieser Ausführungsform ist der Ofen 20 und somit auch ein Ofenraum 22 rechteckig ausgebildet. Der Ofenraum 22 verjüngt sich im oberen Bereich ebenfalls in den Gasabzugschacht 3. Der Einfüllkanal 6 mündet seitlich in eine Wand 23; in der gegenüberliegenden Wand 24 sind den technischen Sauerstoff in den Ofenraum 22 einführende Lanzen 25 angeordnet. Jede Lanze 25 ist ein gabelförmiges Gebilde, das auf die Oberfläche 27 der vom Einfüllkanal 6 herabfallenden Abfallschicht gerichtet ist. Dabei sind mehrere Lanzen 25 der Wand 24 entlang gleichmässig verteilt, und in mehreren, übereinander liegenden Reihen angeordnet; in Fig. 3 und 4 sind als Beispiel zweimal je zwei Lanzen 25 übereinander entlang der Wand 24 verteilt. Die für alle Lanzen 25 gemeinsame Sauerstoffzufuhrleitung ist mit 26 bezeichnet.

Beim erfindungsgemässen Verfahren zum Verbrennen des Abfalls, beispielsweise Mülls, wird das zu verbrennende Abfallmaterial lose, ohne spezielle thermische Vorbehandlung wie Vorerhitzen oder Vortrocknen, in den Ofenraum 2 bzw. 22 zugeführt. Allenfalls könnte je nach Art des Abfallmaterials und der Dimension des Einfüllkanals 6 eine vorherige Eliminierung von übergrossen Abfallteilen in Betracht kommen. Im Ofenraum 2 bzw. 22 wird über die Lanzen 10 bzw. 25 die Oberfläche 8 bzw. 27 der Abfallschicht mit technischem Sauerstoff (93%) direkt beaufschlagt. Durch die bei der dadurch bewirkten Verbrennung von brennbaren Bestandteilen des Abfalls entstehende Wärme werden nicht brennbare, schmelzbare Bestandteile des Abfalls geschmolzen. Der Sauerstoff wird mit einer Geschwindigkeit zugeführt, welche mindestens die Schallgeschwindigkeit erreicht; dies kann in an sich bekannter und in der Zeichnung nicht näher dargestellten Weise beispielsweise nach dem Venturi-Prinzip realisiert werden. Die dadurch entstehenden hohen Turbulenzen in der Abfallschicht bewirken eine vollständige Verbrennung und Einschmelzung.

Vorzugsweise wird der Sauerstoff in unter-stöchiometrischer Menge zugeführt, um den Temperaturverlauf im Schmelzbereich besser zu beherrschen bzw. zu steuern. Die in diesem Fall sich bildenden brennbaren Gase werden über den Gasabzugschacht 3 einer in der Zeichnung nicht dargestellten Nachbrennkammer zugeführt und dort nachverbrannt.

Vorzugsweise kann neben der Hauptverbrennung auf der Oberfläche 8 bzw. 27 der Abfallschicht im Ofenraum 2 bzw. 22 selber eine zusätzliche Gasverbrennung oberhalb der Abfallschicht realisiert werden - beispielsweise durch zusätzliche Sauerstoffzufuhr in den sich oberhalb des Einführkanals 6 befindenden Bereich des Ofenraumes 2 bzw. 22 (in der Zeichnung nicht dargestellt). Diese thermische Ergänzung bewirkt eine Abstrahlung der bei der Gasverbrennung erzeugten Wärme nach unten auf die Abfallschicht und erhöht die Effizienz des erfindungsgemässen Verfahrens.

Bei dem in Fig. 1 und 2 dargestellten Ausführungsbeispiel wird die Schmelze durch die tangentiale Zufuhr des Sauerstoffes im Bereich des imaginären Kreises 7 in eine Drehbewegung versetzt, wodurch eine gute Durchmischung, ein schnelles Schmelzen und ein gleichmässiges Verbrennen gewährleistet ist. Dadurch, dass die Lanzen 10 in einem Abstand von der Wandauskleidung 15 münden, ist die Bewegung des Abfallmaterials in der Nähe der Wand minimal, wodurch die thermische/mechanische Beanspruchung der Wandauskleidung 15 minimiert wird.

Bei der zweiten Ausführungsform nach Fig. 3 und 4 wird am Boden und schräg entlang der den Lanzen 25 gegenüberliegenden Wand 23 eine Abfallschicht gebildet, durch die die darunterliegende Wand 23 gegen die Wärmeeinwirkung isolierend geschützt wird. Die in diesem Fall herabfliessende Schmelze wird gleich wie beim Ofen 1 nach dem ersten Ausführungsbeispiel über die Abzugsöffnung 11 und den Kanal 13 dem Wasserbad 14 zugeführt, wo sie granuliert und in an sich bekannter, nicht näher dargestellter Weise ausgetragen und weitergefördert wird.

Beim erfindungsgemässen Verfahren wird die zugeführte Sauerstoffmenge gesteuert, vorzugsweise optimiert, beispielsweise in Abhängigkeit von der Temperatur im Ofenraum 2 bzw. 22 und/oder von der eingefüllten Abfallmenge und/oder Abfallqualität.

Das erfindungsgemässe Verfahren sowie die in der Zeichnung dargestellten Vorrichtungen zu dessen Durchführung sind neben der Verarbeitung von unvorbehandeltem Abfall ebenfalls zur thermischen Behandlung eines bereits pyrolysierten Abfalls bzw. Mülls geeignet.

So kann beispielsweise das bei einer Entgasung, auch Pyrolyse genannt, in einem an sich bekannten Drehrohrofen oder auf einem Entgasungsrost (Schweizer Patentgesuch Nr. 01 510/94-8; A 10364 CH) unter Zufuhr von Oxidationsmitteln von den flüchtigen, brennbaren Stoffen bereits befreite Abfallmaterial als Müllkoks dem Ofenraum 2 bzw. 22 zugeführt werden. Die bei der Entgasung im Drehrohrofen oder auf dem Entgasungsrost entstandenen, nicht verbrannten flüchtigen Stoffe können entweder in einer separaten Nachbrennkammer oder aber auch gemeinsam mit den aus dem Ofenraum 2 bzw. 22 abgezogenen, brennbaren Gasen in einer dem Gasabzugschacht 3 nachgeschalteten (nicht dargestellten) Nachbrennkammer nachverbrannt werden.

Die aus dem Ofenraum 2 bzw. 22 abgezogenen Gase können aber auch als Wärmemittel für einen Pyrolyseprozess verwendet werden.

Mit dem Müll oder mit dem pyrolisierten Abfall kann auch zusätzlich Schlacke in den Ofen 1 bzw. 22 eingeführt und in die Schmelze eingebunden werden.

Obwohl in den Figuren jeweils eine seitliche Zuführung des Abfalls dargestellt ist, kann die Erfindung auch mit einer anderen Art der Abfallzuführung arbeiten. Beispielsweise kann der Abfall im oberen Bereich des Ofens zugeführt werden. Dies kann achsial geschehen.

Gewünschtenfalls, insbesondere bei Vorliegen grösserer Teile, ist es vorteilhaft, den Abfall vor der Zuführung in den Ofen zu zerkleinern.

Die Wirtschaftlichkeit des erfindungsgemässen Verfahrens ist nicht nur darin zu sehen, dass es keinerlei zusätzlicher Brennstoffe bedarf, sondern auch darin, dass bei den relativ hohen Temperaturen wenig Abgase entstehen; somit kann mit kleineren Aggregaten gearbeitet werden.

## Patentansprüche

1. Verfahren zum Verbrennen von losem Abfall, insbesondere von Müll, wobei unbrennbare Bestandteile des Abfalls in Form einer Schmelze abgezogen werden, dadurch gekennzeichnet, dass die Schmelzwärme durch Verbrennen von brennbaren Bestandteilen einer in einen Ofenraum (2, 22) durch Einführen von losem Abfall gebildeten Abfallschicht mittels Beaufschlagung mit technischem Sauerstoff mit mindestens Schallgeschwindigkeit erfolgt.

2. Verfahren nach Anspruch 1, dadurch gekennzeichnet, dass der technische Sauerstoff in unterstöchiometrischer Menge zugeführt wird.

3. Verfahren nach einem der vorangehenden Ansprüche, dadurch gekennzeichnet, dass mit dem eingefüllten losen Abfall am Boden des Ofenraumes (2, 22) eine Abfallschicht gebildet wird, deren Oberfläche (8, 27) mittels mehrerer örtlich verteilter Lanzen (10, 25) mit technischem Sauerstoff beaufschlagt wird.

4. Verfahren nach Anspruch 3, dadurch gekennzeichnet, dass die Oberfläche (8, 27) der Abfallschicht über gleichsinnig tangential in einen zylinderförmigen Ofenraum (2) mündende Lanzen (10) mit technischem Sauerstoff beaufschlagt wird, um die Schmelze in eine Drehbewegung zu versetzen.

5. Verfahren nach Anspruch 3, dadurch gekennzeichnet, dass in einem rechteckigen Ofenraum (22) mit dem eingeführten losen Abfall am Boden und schräg entlang einer Wand (23) des Ofenraums (22) eine Abfallschicht gebildet wird, deren Oberfläche mit mehreren gleichmässig verteilten Lanzen (25) beaufschlagt wird.

6. Verfahren nach einem der vorangehenden Ansprüche, dadurch gekennzeichnet, dass sich bildende brennbare Gase über einen Gasabzugschacht (3) einer Nachverbrennung zugeführt werden.

7. Verfahren nach einem der Ansprüche 1 bis 5, dadurch gekennzeichnet, dass neben einer Hauptverbrennung auf der Oberfläche (8, 27) der Abfallschicht eine zusätzliche Gasverbrennung mittels zusätzlicher Sauerstoffzufuhr oberhalb der Abfallschicht im Ofenraum (2, 22) erzielt wird, wobei die bei der Gasverbrennung erzeugte Wärme auf die Abfallschicht abgestrahlt wird.

8. Verfahren nach einem der vorangehenden Ansprüche, dadurch gekennzeichnet, dass der lose Abfall ein in einem Pyrolyseofen von flüchtigen Stoffen befreiter Müllkoks ist.

9. Verfahren nach einem der vorangehenden Ansprüche, dadurch gekennzeichnet, dass zusätzlich zum Abfall Schlacke in den Ofenraum (2, 22) eingeführt wird.

10. Verfahren nach Anspruch 6 und Anspruch 8, dadurch gekennzeichnet, dass die sich bildenden brennbaren Gase zusammen mit flüchtigen, brennbaren Stoffen aus dem Pyrolyseofen gemeinsam der Nachverbrennung zugeführt werden.

11. Verfahren nach Anspruch 6 und Anspruch 8, dadurch gekennzeichnet, dass die sich bildenden brennbaren Gase als Wärmemittel dem Pyrolyseofen zugeführt werden.

12. Verfahren nach einem der vorangehenden Ansprüche, dadurch gekennzeichnet, dass die zugeführte Sauerstoffmenge in Abhängigkeit von der Temperatur im Ofenraum (2, 22) und/oder von der eingefüllten Abfallmenge und/oder der Abfallqualität gesteuert wird.

13. Verfahren nach einem der vorangehenden Ansprüche, dadurch gekennzeichnet, dass der Abfallzerkleinert in den Ofenraum eingeführt wird.

14. Vorrichtung zum Durchführen des Verfahrens nach einem der vorangehenden Ansprüche, umfassend einen ortsfesten Ofen (1, 20), dessen Ofenraum (2,22) eine im unteren Bereich angeordnete Abzugöffnung (11) für die Schmelze und mehrere in den Ofenraum (2, 22) mündende, schräg nach unten gerichtete Elemente zur Sauerstoffzufuhr aufweist, bei der der Ofenraum (2, 22) sich oben in einen Gasabzugschacht (3) verjüngt, einen im oberen Bereich des Ofenraumes (2, 22) mündenden Einfüllkanal (6) für den losen Abfall aufweist, und der technische Sauerstoff mit mindestens Schallgeschwindigkeit zuführbar ist.

15. Vorrichtung nach Anspruch 14, dadurch gekennzeichnet, dass der Ofenraum (2) zylindrisch ausgebildet ist, wobei die Elemente zur Sauerstoffzuführung in Form von gleichsinning tangential zu einem imaginären Kreis (7) angeordneten Lanzen (10) ausgebildet sind.

16. Vorrichtung nach Anspruch 14, dadurch gekennzeichnet, dass der Ofenraum (22) rechteckig ausgebildet ist, wobei der Einfüllkanal (6) in eine Wand (23) seitlich mündet und die Elemente zur Sauerstoffzufuhr in Form von auf den unteren Teil der Wand (23) ausgerichteten Lanzen (25) ausgebildet sind.

17. Vorrichtung nach Anspruch 16, dadurch gekennzeichnet, dass die Lanzen (25) Gabelform besitzen, wobei mehrere Lanzen (25) entlang einer der Einfüllkanal gegenüberliegenden Wand (24) verteilt sind.

18. Vorrichtung nach Anspruch 16, dadurch gekennzeichnet, dass die Lanzen (25) in mehreren Reihen übereinander angeordnet sind.

19. Vorrichtung nach einem der Ansprüche 14 bis 18, dadurch gekennzeichnet, dass mehrere zusätzliche Sauerstoffzufuhrelemente in den oberen Bereich des Ofenraumes (2, 22) oberhalb der Sauerstoffzufuhrelemente für die Hauptverbrennung münden.

## Claims

1. Method of incinerating loose waste material, particularly refuse, wherein incombustible constituents of the waste material are drawn off in the form of a melt, characterized in that the melting heat is obtained by burning combustible constituents of a layer of waste material, which is formed in a furnace chamber (2, 22) by the introduction of loose waste material, by means of the introduction of technical-grade oxygen at at least the speed of sound.

2. Method according to Claim 1, characterized in that the technical-grade oxygen is fed in in less than stoichiometric amounts.

3. Method according to one of the preceding claims, characterized in that with the loose waste material introduced there is formed on the bottom of the furnace chamber (2, 22) a layer of waste material whose surface (8, 27) is acted on by technical-grade oxygen with the aid of a plurality of lances (10, 25) in distributed positions.

4. Method according to Claim 3, characterized in that the surface (8, 27) of the layer of waste material is acted on by technical-grade oxygen with the aid of lances (10) discharging in the same direction tangentially into a cylindrical furnace chamber (2) in order to impart a rotational movement to the melt.

5. Method according to Claim 3, characterized in that in a rectangular furnace chamber (22) there is formed with the loose waste material introduced, on the bottom and obliquely along a wall (23) of the furnace chamber (22), a layer of waste material whose surface is acted on by a plurality of uniformly distributed lances (25).

6. Method according to one of the preceding claims, characterized in that combustible gases formed are fed via a gas outlet stack (3) to a secondary combustion process.

7. Method according to one of Claims 1 to 5, characterized in that in addition to a main combustion on the surface (8, 27) of the layer of waste material an additional gas combustion is achieved by means of an additional supply of oxygen above the layer of waste material in the furnace chamber (2, 22), the heat produced in the gas combustion being radiated onto the layer of waste material.

8. Method according to one of the preceding claims, characterized in that the loose waste material is a refuse coke freed of volatile substances in a pyrolysis furnace.

9. Method according to one of the preceding claims, characterized in that, in addition to the waste material, slag is introduced into the furnace chamber (2, 22).

10. Method according to Claim 6 and Claim 8, characterized in that the combustible gases formed are passed on to the secondary combustion conjointly with volatile combustible substances from the pyrolysis furnace.

11. Method according to Claim 6 and Claim 8, characterized in that the combustible gases formed are fed as a heating agent to the pyrolysis furnace.

12. Method according to one of the preceding claims, characterized in that the amount of oxygen supplied is controlled in dependence on the temperature in the furnace chamber (2, 22) and/or on the amount of waste material introduced and/or on the quality of the waste material.

13. Method according to one of the preceding claims, characterized in that the waste material is introduced comminuted into the furnace chamber.

14. Apparatus for applying the method according to one of the preceding claims comprising a stationary furnace (1, 20), whose furnace chamber (2, 22) has an outlet aperture (11) arranged in the bottom region for the melt and a plurality of oxygen supply elements leading into the furnace chamber (2, 22) and directed obliquely downwards, in which apparatus the furnace chamber (2, 22) tapers at the top into a gas outlet stack (3), has a filling duct (6), leading into the top region of the furnace chamber (2, 22), for the loose waste material, and the technical-grade oxygen can be fed at at least the speed of sound.

15. Apparatus according to Claim 14, characterized in that the furnace chamber (2) has a cylindrical shape, while the oxygen supply elements are in the form of lances (10) arranged in the same direction tangentially to an imaginary circle (7).

16. Apparatus according to Claim 14, characterized in that the furnace chamber (22) has a rectangular shape, the filling duct (6) leading at the side into a wall (23) and the oxygen supply elements being in the form of lances (25) directed onto the bottom part of the wall (23).

17. Apparatus according to Claim 16, characterized in that the lances (25) have a forked shape, while a plurality of lances (25) are distributed along a wall (24) lying opposite the filling duct.

18. Apparatus according to Claim 16, characterized in that the lances (25) are arranged in a plurality of rows one above the other.

19. Apparatus according to one of Claims 14 to 18, characterized in that a plurality of additional oxygen supply elements lead into the top region of the furnace chamber (2, 22) above the oxygen supply elements for the main combustion.

## Revendications

1. Procédé d'incinération de déchets en vrac, en particulier des ordures, dans lequel on extrait des composants non combustibles des déchets sous forme d'une masse en fusion, caractérisé en ce que la chaleur de fusion est générée par incinération de composants combustibles par attaque avec de l'oxygène technique au moins à la vitesse du son dans une couche de déchets formée dans une chambre de four (2, 22) par introduction de déchets en vrac.

2. Procédé selon la revendication 1, caractérisé en ce que l'oxygène technique est amené en quantité sous-stoechiométrique.

3. Procédé selon l'une des revendications précédentes, caractérisé en ce que l'on forme une couche de déchets avec les déchets en vrac remplis au fond de la chambre de four (2, 22), dont la surface de couche (8, 27) est attaquée par de l'oxygène technique au moyen de plusieurs lances réparties dans l'espace (10, 25).

4. Procédé selon la revendication 3, caractérisé en ce que la surface (8, 27) de la couche de déchets est attaquée par de l'oxygène technique via des lances (10) débouchant tangentiellement dans le même sens dans une chambre de four cylindrique (2), afin de mettre en rotation la masse en fusion.

5. Procédé selon la revendication 3, caractérisé en ce que l'on forme une couche de déchets avec les déchets introduits en vrac dans une chambre de four rectangulaire (22) au fond et en oblique le long d'une paroi (23) de la chambre de four (22), dont la surface de couche est attaquée au moyen de plusieurs lances (25) agencées en répartition régulière.

6. Procédé selon l'une quelconque des revendications précédentes, caractérisé en ce que l'on amène à une postcombustion les gaz combustibles qui se forment, via une cheminée d'évacuation de gaz (3).

7. Procédé selon l'une quelconque des revendication 1 à 5, caractérisé en ce que l'on obtient, outre une incinération principale sur la surface (8, 27) de la couche de déchets, une combustion de gaz supplémentaire au moyen d'une amenée d'oxygène supplémentaire au-dessus de la couche de déchets dans la chambre de four (2, 22), la chaleur générée lors de la combustion des gaz étant rayonnée vers la couche de déchets.

8. Procédé selon l'une quelconque des revendications précédentes, caractérisé en ce que les déchets en vrac forment un coke de déchets libéré de substances volatiles dans un four de pyrolyse.

9. Procédé selon les revendications 6 et 8, caractérisé en ce que l'on introduit, en supplément aux déchets, des scories dans la chambre de four (2, 22).

10. Procédé selon l'une ou l'autre des revendications 6 et 8, caractérisé en ce que l'on amène les gaz combustibles qui se forment ensemble avec des substances combustibles volatiles provenant du four de pyrolyse, conjointement à la postcombustion.

11. Procédé selon les revendications 6 et 8, caractérisé en ce que l'on amène les gaz combustibles qui se forment en tant que produit d'apport thermique au four de pyrolyse.

12. Procédé selon l'une quelconque des revendications précédentes, caractérisé en ce que l'on commande la quantité d'oxygène amenée en dépendance de la température dans la chambre de four (2, 22) et/ou en dépendance de la quantité de déchets remplie et/ou de la qualité de déchets.

13. Procédé selon l'une quelconque des revendications précédentes, caractérisé en ce que l'on introduit les déchets en état fragmenté dans la chambre de four.

14. Dispositif pour mettre en oeuvre le procédé selon l'une quelconque des revendications précédentes, comportant un four fixe (1, 20) dont la chambre de four (2, 22) présente une ouverture d'évacuation (11) pour la masse en fusion ménagée dans la zone inférieure, et plusieurs éléments débouchant dans la chambre de four (2, 22) et dirigés en oblique vers le bas pour l'amenée d'oxygène, dans lequel la chambre de four (2, 22) va en se rétrécissant vers le haut pour former une cheminée d'évacuation de gaz (3), comprend un canal de remplissage (6) débouchant dans la zone supérieure de la chambre de four (2, 22) pour les déchets en vrac, et l'oxygène technique étant amené au moins à la vitesse du son.

15. Dispositif selon la revendication 14, caractérisé en ce que la chambre de four (2) est réalisée en forme cylindrique, les éléments pour l'amenée d'oxygène étant réalisés sous forme de lances (10) agencées tangentiellement dans le même sens vers un cercle imaginaire (7).

16. Dispositif selon la revendication 14, caractérisé en ce que la chambre de four (22) est réalisée en forme rectangulaire, le canal de remplissage (6) débouchant latéralement dans une paroi (23) et les éléments pour l'amenée d'oxygène étant réalisés sous forme de lances (25) dirigées vers la partie inférieure de la paroi (23).

17. Dispositif selon la revendication 16, caractérisé en ce que les lances (25) présentent la forme de fourches, plusieurs lances (25) étant réparties le long d'une paroi (24) opposée au canal de remplissage.

18. Dispositif selon la revendication 16, caractérisé en ce que les lances (25) sont agencées en plusieurs rangées les unes aux dessus des autres.

19. Dispositif selon l'une quelconque des revendications 14 à 18, caractérisé en ce que plusieurs éléments d'amenée d'oxygène supplémentaires débouchent dans la zone supérieure de la chambre de four (2, 22) au-dessus des éléments d'amenée d'oxygène pour l'incinération principale.
